# EUROPEAN PATENT APPLICATION

(11) **EP 3 199 059 A1**
(43) Date of publication of application: **02.08.2017**
(21) Application number: 16153608.1
(22) Date of filing: 01.02.2016
(51) Int. Cl.: A47B 13/02, A47B 13/06, F16B 12/42, F16B 12/50, F16B 12/52

(54) **FURNITURE FRAME**

(71) Applicant: Rol Ergo AB, 555 93 Jönköping (SE)
(72) Inventor: Hjelm, Johan, 564 36 Bankeryd (SE)
(74) Representative: Awapatent AB

(57) **Abstract**

The present application relates to a furniture frame (1) comprising at least one bar member (2, 2a, 2b, 2c, 2d) configured to be fastened to a furniture top member (8), at least one leg member (4, 4a, 4b, 4c, 4d). The bar member comprises at least one coupling means (3, 3a, 3b, 3c, 3d) configured to, when the bar member is fastened to a furniture top member, engage with the leg member, and the leg member comprises at least one opening (5, 5a, 5b, 5c, 5d) configured to engage with the coupling means, such that the leg member becomes fixed to the furniture top member when the bar member is fastened to the furniture top member by the engagement. With this arrangement the furniture frame allows for simple mounting into a stable frame construction which is cost and time efficient to produce as no welding is required.

## Description

### Technical Field

The present disclosure relates to a furniture frame, and especially to an arrangement related to the functional components of a furniture frame.

### Background

In the field of furniture frames, such as a table frame, a common way to mount the parts of a frame is by welding all or selected parts of the frame into a stable construction.

In this type of construction, it is sometimes desirable to reduce the space needed for transportation and cost and time for welding. Prior art solutions, for example as described in GB1243093 or US642962, permits a table frame structure to be transported in a de-mounted state.

Hence, a particular problem with this type of construction is the complex and time-consuming production of the parts and complex and time-consuming mounting of the frame and the mounting thereof to a furniture top member. Therefore, there is a need for a furniture frame which enables effective transportation, uncomplicated mounting, and that does not require any welding operation, to provide an accelerated production.

### Summary

It is an object of the present invention to provide an improved solution that alleviates the mentioned drawbacks with present devices.

According to a first aspect of the invention, this and other problems are achieved by a furniture frame comprising at least one bar member, configured to be fastened to a furniture top member, at least one leg member, wherein the bar member comprises at least one coupling means configured to, when the bar member is fastened to a furniture top member, engage with said leg member, and the leg member comprises at least one opening configured to engage with the coupling means, such that the leg member becomes fixed to the furniture top member by the engagement when the bar member is fastened to the furniture top member.

With this arrangement the furniture frame allows for simple mounting into a stable frame construction which is cost and time efficient to produce.

By bar member is implied the transversal piece of a furniture frame, normally extending along the floor-facing side of a furniture top member and in between the legs of a furniture frame construction. The bar members may be produced in any suitable material, for example metal, and may be hollow, u-shaped or of any other suitable shape. A first side of the bar member will upon fixation to a furniture top member come into contact with the furniture top member.

Leg members may be produced from the same material as the bar members, e.g. metal, but is not limited to this and may be produced from other material such as wood or plastics. The leg members may be hollow or at least in part hollow to allow for one or more openings suitable to engage with a coupling means. The leg members may have a circular or rectangular cross section, but is not limited to such shape.

The opening on the leg member is designed to be engaged with one or more bar members via the bar member's coupling means and may be of, for example, rectangular shape or other shape that allows for engagement with the coupling means, such as, but not limited to, oval. Further, the width of the opening corresponds substantially to the width of the coupling means.

It is understood that upon fixation of a bar member to a furniture top member, the coupling means may engage with the opening of the leg member and the fixation force exerted on the bar member also, in full or in part, may exert a force on the leg member towards the furniture top member, thus forcing the leg member into contact with the furniture top member and into a fixed position relative the bar member and the furniture top member.

It is further understood that, a furniture frame as described, forced into fixation by exerting force on the leg member via the engagement with the bar member towards a stable position with regard to the bar member and furniture top member, may not be in the need of any other fixation or enforcement means such as welding or screwing between leg and bar member nor between leg member and furniture top member to constitute a stable construction, which implies that it may be constructed in a simple manner with few steps and requiring a limited production time. Hence, the leg member may become fixed to the furniture top member by the bar member being fastened to the furniture top member.

The present invention relates to a furniture frame, which may be a frame for furniture such as a table, a chair, a shelf or other type of furniture comprising a frame. The furniture top member may be a table top, a chair seat, a shelf top part or the like.

According to a one embodiment, the bar member extends along a longitudinal axis and the coupling means extends along the same axis. The coupling means may consist of two parts, wherein the first part extends longitudinally along the same axis as the bar member, and the second part extends perpendicular to the longitudinal axis. Alternatively, the coupling means may extend as a projection from a main part of the bar member along the longitudinal axis. The bar member and the coupling means may be produced from one piece of the same material in one processing step.

In a further embodiment, the leg member may comprise a locking means configured to releasably engage with a slot at a longitudinal end of the leg member to lock the bar member to the leg member The locking means of the leg member may further comprise at least one projecting portion configured to extend along the first side of the bar member and comprising means for being fastened to a furniture top member by the same fastening means as the bar member. The projecting portion may thereby extend along an outer side of the bar member, or along an inner side, inside the bar member. Such means for being fastened may be a hole for receiving a fastening means, such as a screw. As the locking means locks the leg member and bar member to each other, and is engaged with slots on the leg member at the same time as the coupling means of the bar member is engaged with the opening in the leg member, the force applied by the fastening means on the bar member and projecting portion of the locking means towards a furniture top member thereby may force the leg member in the same direction and into contact with the furniture top member creating a stable construction of the furniture frame.

According to another embodiment the coupling means may comprise a notch on the bar member extending perpendicular to the longitudinal axis along which the bar member extends. The width of the notch may be substantially equal to the thickness of the wall of the leg member. The notch may extend either towards or away from a furniture top member upon fixation of the bar member to a furniture top member. The notch may be used for engagement with the opening and for embracement of the wall in the leg member to improve stability of the construction. The leg members may further be hollow or at least in part hollow to comprise a wall configured to be embraced by the coupling means comprising the notch. The wall of the leg member may then extend in width, length, and thickness suitable for embracement by the coupling means with the notch.

According to a further embodiment, the coupling means comprises a first part extending along the longitudinal axis and a second part extending along the notch. The second part of the coupling means may extend along the notch either towards or away from a furniture top member upon fixation of the bar member to a furniture top member. This signifies that a force may be applied by the bar member and/or coupling means on the leg member via engagement with the opening in the leg member, towards the furniture top member into a fixed position relative the furniture top member and bar member, without the use of any additional fixation or enforcement means between the leg and the furniture top member. The notch may further be configured to embrace the wall of the leg member when being engaged with the opening of the leg member. The embracement of the wall of the leg by the notch on the coupling means may also increase stability of the construction as it may clamp the leg member into a fixed position.

In yet another embodiment, the coupling means may comprise a wedged notch configured to engage with the opening of the leg member. The wedged configuration may provide further stabilization to the furniture frame as the leg member is clamped by the notch into the bar member by the force exerted upon fixation to a furniture top member. The narrowest width of the wedged notch may be equal to or less than the thickness of the wall of the leg member.

According to a further embodiment, the notch extends form a first side of the bar member configured to be in contact with a furniture top member when the bar member is fastened to said furniture top member. The notch extending from the first side of the bar member in contact with the furniture top member may imply that when the notch is embracing the wall of the leg member and a force is applied by a fastening means on the bar member towards the furniture top member, the leg member may also be forced in the same direction and into contact with the furniture top member.

In yet another embodiment, the bar member may comprise a first side configured to be in contact with a furniture top member when the bar member is fastened to said furniture top member, and wherein the notch extends from a second side of the bar member being opposite the first side and towards said first side. The notch may be of such depth that when engaged to the leg member the first side does not extend further towards the furniture top member than the longitudinal end of the leg member. The opening in the leg member may be formed as a cut-out at a longitudinal end of the leg member. The cut-out may correspond in shape to the notch of the bar member in order to receive the bar member with the notch embracing the wall of the leg member axially next to the cutout.

Further, in one embodiment, a coupling means according to this arrangement may comprise a cut-in portion at a longitudinal end of the bar member. The cut-in portion may cross-link with a like coupling member on a like bar member forming a joint assembly of one or more bar members. The cut-in portion may be of such depth that the joined bar members form smooth surfaces on both the first and second side.

In one embodiment, the cut-in portion may be arranged to engage two bar members to each other and extend from opposing sides at opposing longitudinal ends of the bar member. The cut-in portion may engage two bar members to each other by forming a cross-link between the two bar members fastening them to each other. The notch extends towards the first side to a distance from the first side such that when engaged with the leg member the bar member does not protrude beyond the leg member in the direction towards the furniture top member.

In another embodiment, the coupling means may comprise a coupling projection configured to extend into the opening of the leg member. The coupling projection extends into the opening of the leg member such that when the bar member is fastened to a furniture top member, the projection exerts force via the opening on the leg member towards the furniture top member.

In a further embodiment, the locking means may comprise a projecting portion configured to extend into the bar member. The projecting portion extending to a depth such that the bar member and the locking means may be fixed to the furniture top member simultaneously by the same fastening means. A fastening means, such as a screw, extending through the bar member to fix the bar member to a furniture top member, may thereby extend through the projecting portion and fixing the leg member to the furniture top member by further means of the coupling projection, the slot and the opening in the leg member.

In another embodiment of the present invention, the coupling means may constitute an L-shape or other shape such as a U- or T-shape allowing for engagement with the opening in the leg member with one of the parts of the shape extending towards a furniture top member upon the bar member's fixation to this. The L-shape may form the notch of the coupling means. The coupling means may comprise a plurality of L-shaped members, for instance four L-shaped members.

According to a further embodiment, the bar member may comprise one or more coupling means on one or both of its longitudinal ends. A preferred embodiment may be for the coupling means to be arranged on both sides.

According to yet another embodiment the furniture frame may comprise four leg members and four bar members. An embodiment such as this provides a stable frame that can be used in combination with a furniture top member in a stable construction. Alternatively, a furniture frame according to the present invention may comprise one leg member and one or more bar members, preferably at least two bar members, all configured to be engaged to the leg member and fixed to a furniture top member. Similarly, a furniture frame according to the present invention may comprise two or more leg members and one or more bar members, preferably at least two bar members, configured to be engaged to each leg member.

According to a second aspect of the invention, a piece of furniture is provided. The piece of furniture may comprise such a furniture frame as described above and a furniture top member. A piece of furniture according to the presented embodiment may be transported or shipped in de-mounted state, and allows for simple and time-effective production and assembly. Such piece of furniture may be a table comprising a table frame and a table top, or a chair comprising a chair frame and a chair seat.

### Brief Description of the Drawings

This and other aspects of the present invention now be described more in detail, with reference to the appended drawings showing a currently preferred embodiment of the invention.

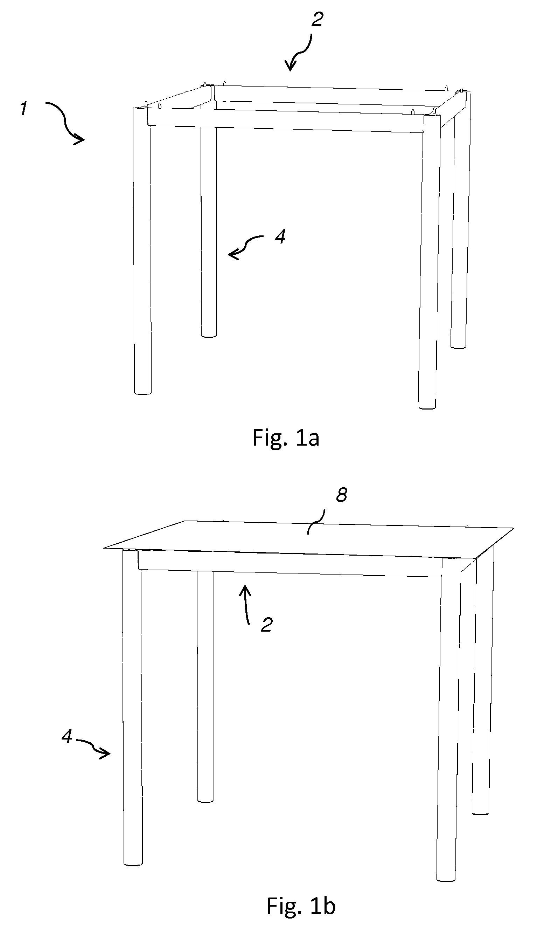

Figure 1 a shows a perspective view of a furniture frame in mounted state comprising four leg members and four bar members according to an embodiment of the invention.
Figure 1 b shows a perspective view of a furniture frame according to an embodiment of the invention mounted to a furniture top member.
Figure 2 shows a bar member according to an embodiment of the invention.
Figure 3 shows a perspective view of a detailed view of the coupling means of the bar member in fig. 2.
Figure 4 shows a perspective view of a cross section of a furniture frame according to an embodiment of the invention.
Figure 5 shows a perspective view of a cross section of a bar member engaged with a leg member according to an embodiment of the invention.
Figure 6 shows a bottom view of two bar members engaged to a leg member according to an embodiment of the invention.
Figure 7 shows side view of a leg member according to an embodiment of the invention.
Figure 8 shows a perspective view of a bar member according to an embodiment of the invention.
Figure 9 is a perspective view of a detailed view of the coupling means of the bar member in fig. 8.
Figure 10 shows a perspective view of a cross section of a furniture frame fixed to a furniture top member according to an embodiment of the invention.
Figure 11 shows a top perspective view of two bar members engaged to a leg member according to an embodiment of the invention.
Figure 12 shows side view of a leg member according to an embodiment of the invention.
Figure 13 shows a perspective view of a bar member according to an embodiment of the invention.
Figure 14 is a perspective view of a detailed view of the coupling means of the bar member in fig. 13.
Figure 15a shows a perspective view of a locking means according to an embodiment of the invention.
Figure 15b shows a perspective view of a furniture frame according to an embodiment of the invention.
Figure 16 shows side view of a cross section of a furniture frame fixed to a furniture top member according to an embodiment of the invention.
Figure 17 shows a bottom view of two bar members engaged with each other and to a leg member according to an embodiment of the invention.
Figure 18 shows a perspective view of a leg member according to an embodiment of the invention.
Figure 19 shows a perspective view of a bar member according to an embodiment of the invention.
Figure 20 shows a perspective view of a detailed view of a bar member according to an embodiment of the invention.
Figure 21 shows a perspective view of a locking means according to an embodiment of the invention.
Figure 22 shows a perspective view of a furniture frame according to an embodiment of the invention.
Figure 23 shows a perspective view of a furniture frame according to an embodiment of the invention.
Figure 24 shows a perspective view of a furniture frame according to an embodiment of the invention.
Figure 25 shows a perspective view of a leg member according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

In the description below, the furniture frame of the invention will be exemplified as a table frame. The invention relates to a furniture frame, which may be a frame for a table, a chair, a shelf or other furniture comprising a frame. As the invention is exemplified as a table frame, the furniture top member will be illustrated as a table top. It is however understood that the exemplified table top may be the seat of a chair, a shelf or other piece of furniture where a frame is used in the construction.

The table frame 1 according to the invention is illustrated in fig. 1 a. The table frame 1 is shown in a mounted state. The table frame 1 comprises four bar members 2 and four leg members 4. The four bar members 2 may comprise four equally long bar members or two sets of bar members having different length.

Fig. 1 b shows a table frame with four leg members 4 and four bar members 2 mounted to a table top 8 forming a table. The bar members 2 are fastened to the table top 8 and thereby fixating the table frame 1 to the table top 8.

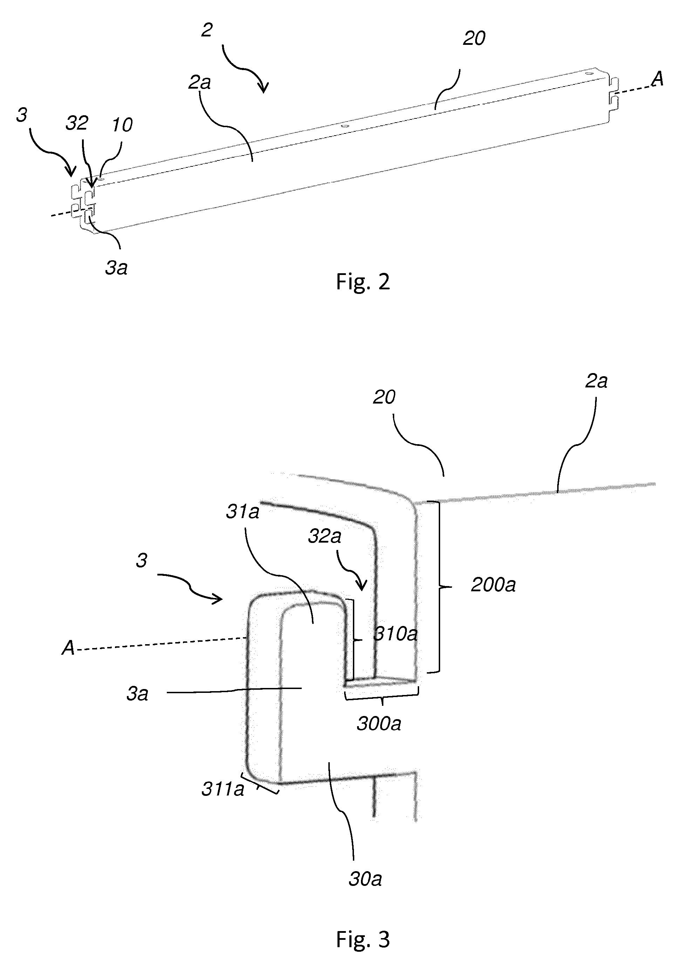

Fig. 2 shows a bar member 2a in a first preferred embodiment, extending along a longitudinal axis A. The bar member comprises at least one coupling means 3, extending along the same axis A as the bar member 2a, and holes 10 for engagement with fastenings means. In fig. 2 the coupling means 3 comprises a plurality of hooks 3a.

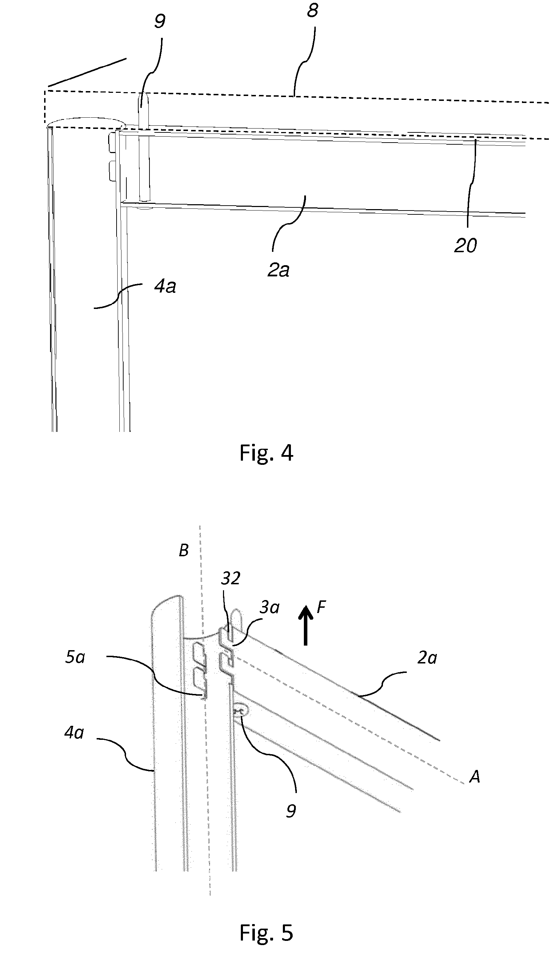

Fig. 3 demonstrates an example of hooks 3a, for engagement with the leg member 4a. The bar member 2 comprises a first side 20 which upon fixation comes into contact with a table top 8 (see fig. 4). The coupling means 3 is fixed to or forming one piece with the bar member 2. The hook 3a comprises two parts, a first part 30a extending in the same direction A as the bar member 2a and a second part 31 a extending perpendicular to the longitudinal direction A. The second part 31 a is separated from the bar member by a notch 32a. The notch 32a opens towards the first side 20 of the bar member 2a.

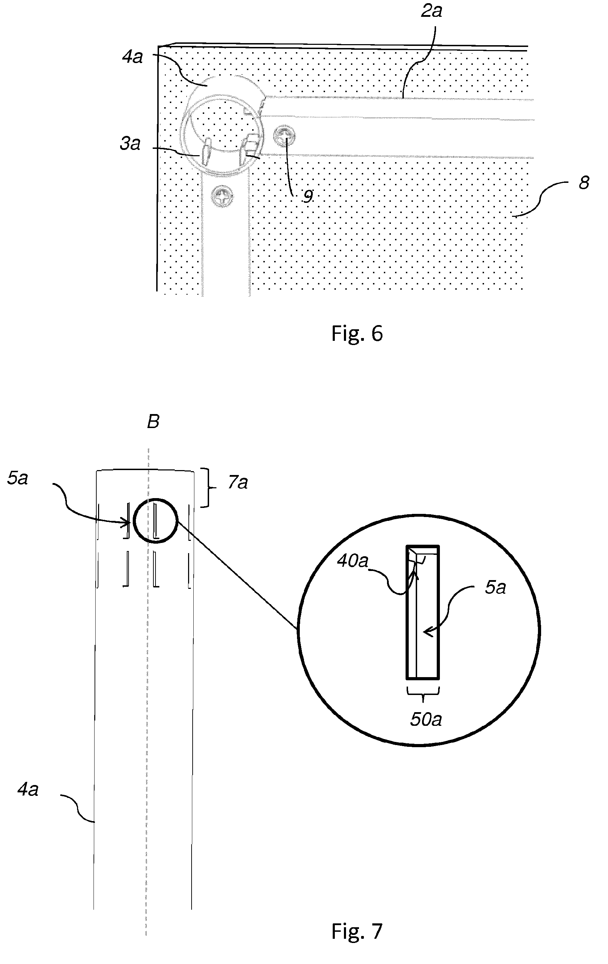

Further, the extension 310a of the second part 31 a is less or equal to the distance 7a between the longitudinal end of the leg member 4a and the opening 5a, as shown in fig. 7. Referring to figs. 3 and 7, the extension 300a of the first part is equal to the width of the notch 32a and is substantially equal to the thickness 40a of the wall of the leg member 4a at the location of the opening 5a. The width of the notch 32a may be wedged in such a manner that the extension 300a of the first part 30a corresponds to the narrowest part of the notch 32a. I.e. the width of the notch 32a may increase along a direction perpendicular to the longitudinal direction A and towards the first side 20 of the bar member 2a.

In fig. 3, the distance 200a between the side 20 and the point from where the first part 30a of the coupling means extends from the bar member 2a, is substantially equal to the distance 7a between the leg member's longitudinal end and the opening 5a, shown in fig. 7, such that both the leg member 4a and the bar member 2a are in contact with a table top 8 upon fixation of the bar member 2a to the table top 8.

A cross section of the table frame fixed to a table top 8 is shown in fig. 4. Fig. 4 shows a bar member 2a engaged to a leg member 4a and fixed to a table top 8 by fastenings means 9 such as screws extending through the bar member 2 into the table top 8 and thereby fixating both the bar member 2 and the leg member 4 into a fixed position.

The cross section in fig. 5 shows an embodiment of a bar member 2a, via the hooks 3a and notch 32a, engaged with the opening 5a and embracing the wall of a leg member 4a. The hooks 3a comprise four L-shaped hooks wherein the L-shape forms the notch 32. Upon fixation by fastening means 9 such as screws, the engagement exerts force on the leg member 4a towards a fixed position. The fastening means 9 are used to mount the table frame to a table top 8 and bring the bar member 2a, leg member 4a, and the table top 8 into a stable construction.

In fig. 6 a bottom view of two bar members 2a of the first preferred embodiment engaged to a leg member 4a is shown. The hooks 3a are engaged with the openings 5a and embrace the wall of the leg member 4a. The screws 9 are screwed into the table top 8, fixating the bar members 2a to the table top 8 and thereby pressing the leg member 4a towards the table top 8 and fixating the leg member 4a thereto.

Fig. 7 shows a first preferred embodiment of a leg member 4a comprising a plurality of openings 5a for engagement with the hooks 3a. The leg member 4a extends along a longitudinal axis B. The openings 5a are located at a distance 7a from the longitudinal end of the leg member 4a. The width 50a of an opening 5a is substantially equal to the width 311 a (see fig. 3) of a hook 3a. The wall of the leg member 4a extends from each side of the opening in length and direction as required for embracement by the coupling means. The thickness of the wall at the opening 5a corresponding substantially to the width of the notch 32a.

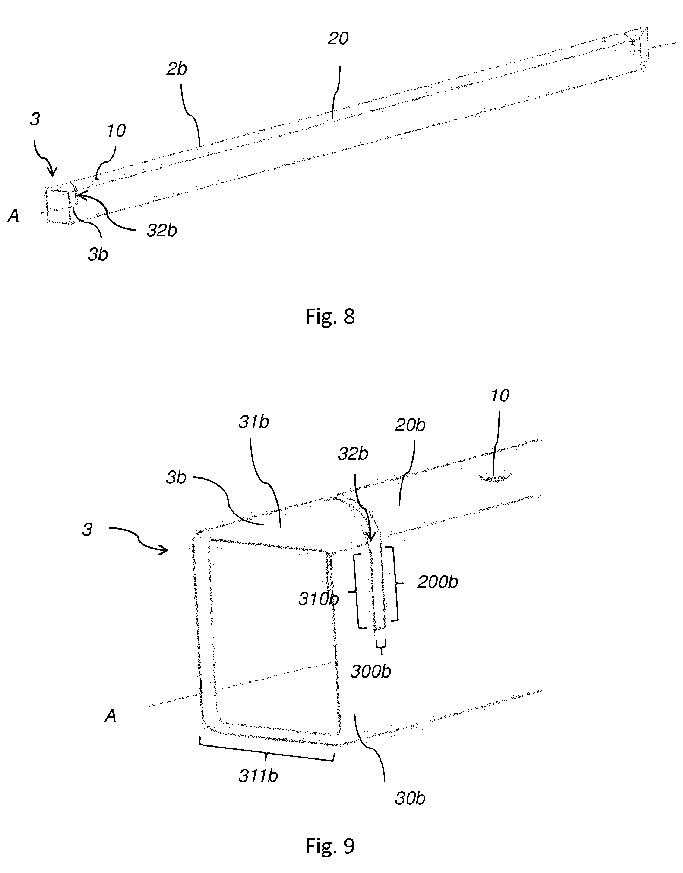

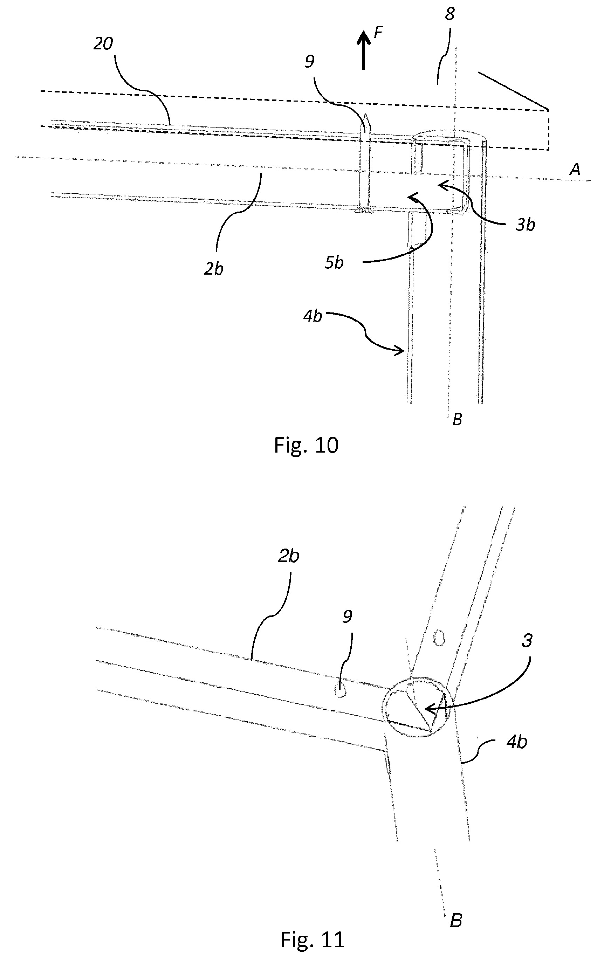

Fig. 8 shows a second preferred embodiment of a bar member 2b extending along a longitudinal axis A. The bar member 2b comprises at least one coupling member 3b and holes 10 for fastening means. The coupling member 3b extends along the same axis A as the bar member 2b and is partly separated from the bar member 2b by a notch 32b. The notch 32b extends towards the first side 20 which upon fixation comes into contact with a table top 8 (see fig. 10)

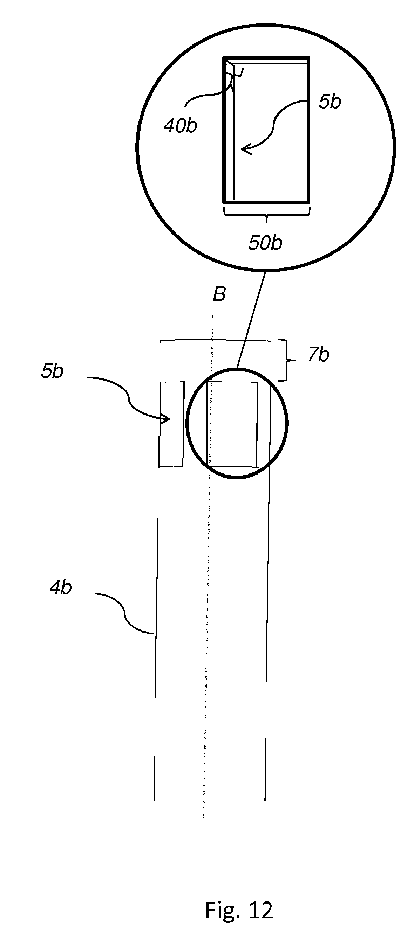

Fig. 9 illustrates an example of coupling member 3b, for engagement with the leg member 4b. The coupling member 3b is fixed to or forming one piece with the bar member 2b. The coupling member 3b comprises two parts, a first part 30b extending in the same direction as the bar member 2b and a second part 31 b extending perpendicular to this direction. The second part 31 b is separated from the bar member by a notch 32b. Further, the extension 310b of the second part 31 b is less or equal to the distance 7b between the longitudinal end of the leg member 4b and the opening 5b, as shown in fig 12. Referring to fig. 9 and 12, the extension 300b of the first part is equal to the width of the notch and is substantially equal to the thickness 40b of the wall of the leg member 4b at the location of the opening 5b. The width of the notch 32b may be wedged in such a manner that the extension 300b of the first part 30b corresponds to the narrowest part of the notch 32b. I.e. the width of the notch 32b may increase along a direction perpendicular to the longitudinal direction A and towards the first side 20 of the bar member 2b.

In fig. 9, the distance 200b between the side 20 and the point from where the first part 30b of the coupling means extends from the bar member 2b, is substantially equal to the distance 7b between the leg member's longitudinal end and the opening 5b, shown in fig. 12, and also substantially equal to the extension 310b of the second part, such that both the leg member 4b and the bar member 2b are in contact with a table top 8 upon fixation of the bar member 2b to the table top.

Fig. 10 shows, in cross section, an embodiment as exemplified in figures 8-9 and 11-12, where the bar member 2b, via the coupling member 3b engaged with an opening 5b and embracing a wall of a leg member 4b is engaged to the leg member 4b. The force exerted by fastening the bar member 2b by fastening means 9, such as screws, to the table top 8 upon fixation of the bar member 2b to the table top 8 forces the leg member 4b into a fixed position to the table top 8.

Fig. 11 shows a top view of two bar members 2b of one of the previously described embodiments (see fig 8-12) engaged to a leg member 4b. The two bar members 2b are angled at the longitudinal ends so that they form a diagonal connection with one another inside the leg member 4b. The connection between the diagonal ends of the bar members 2b inside the leg member 4b may increase the stability of the table frame construction as the connection fixes the bar members 4b into a stable position relative the other parts of the table frame. The two diagonal ends may be screwed together to further fix them to each other.

Fig. 12 shows a second preferred embodiment of a leg member 4b comprising one or more openings 5b for engagement with the coupling member 3b. The leg member 4b extends along a longitudinal axis B. The opening 5b is located at a distance 7b from the longitudinal end of the leg member 4b. The width 50b of the opening is substantially equal to the width 311 b (see fig. 9) of the coupling member 3b. The wall of the leg member 4b extends from each side of the opening in length and direction as required for embracement by the coupling means. The thickness of the wall at the opening 5b corresponding to the width of the notch 32b.

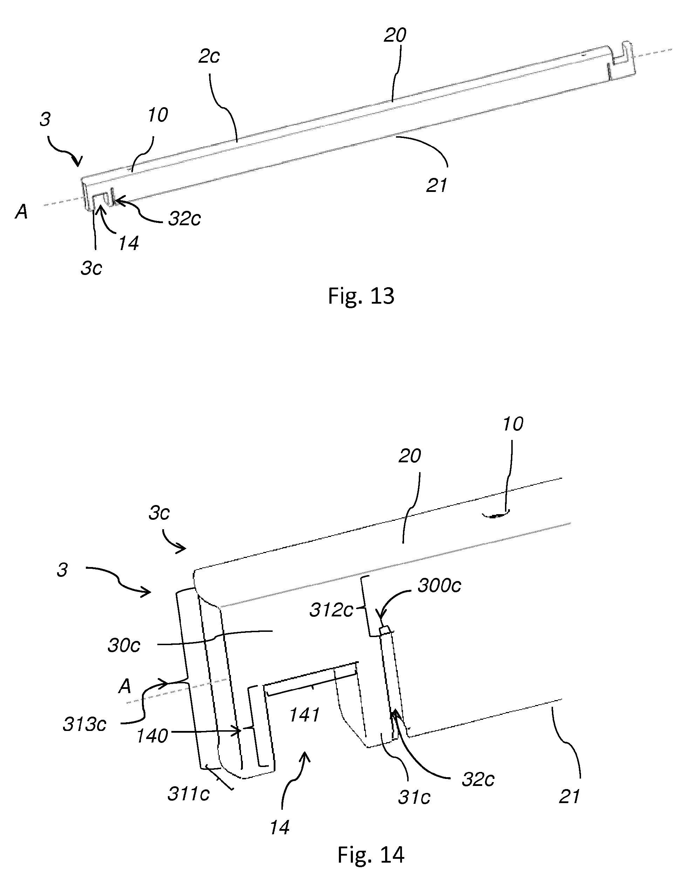

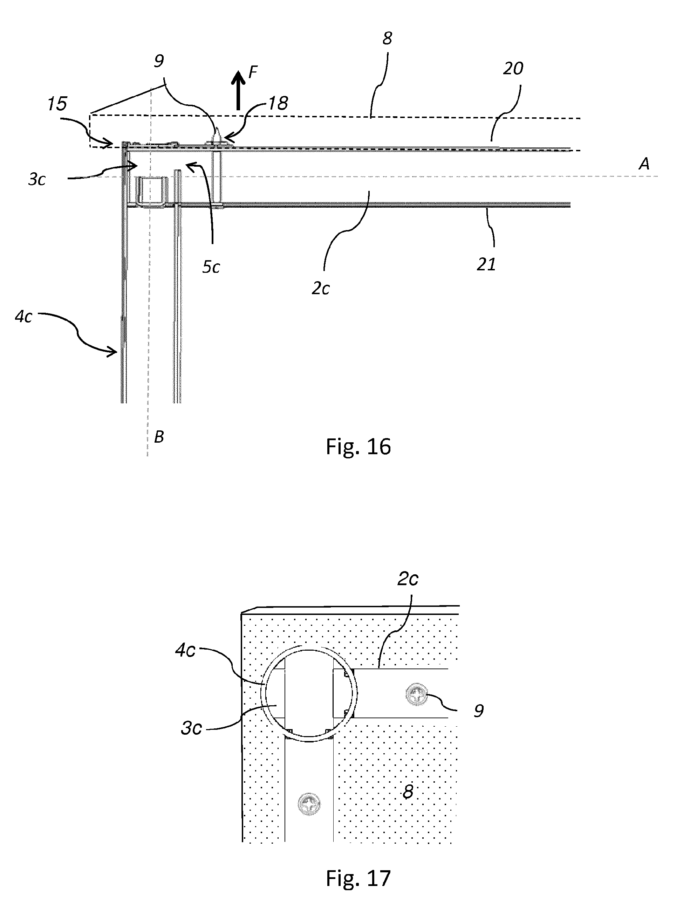

Yet another example of an embodiment of a bar member 2c is illustrated in fig. 13. The bar member 2c comprises similarly to previously described bar members 2a and 2b, at least one coupling means 3, extending along the same axis A as the bar member 2c, and holes 10 for engagement with fastenings means. The coupling member 3c also comprises an optional cut-in portion 14 configured to engage with like cut-in portions 14 in such a manner as to create a cross-link between the coupling member 3c of different bar members 3c engaged with the same leg member 4c. The cut-in portion 14 opens up to opposite sides on opposite ends of the bar member 2c. Further the bar member comprises a first side 20, which upon fixation comes into contact with a table top and a second side 21 being opposite the first side (fig. 16).

Fig. 14 shows a more detailed view of a coupling member 3c for engagement with a leg member 4c and cross-linking with like coupling member 3c. The coupling member 3c comprises two parts, a first part 30c extending along the same axis A as the bar member 2c and a second part 31 c extending perpendicular to this direction. The second part 31 c is separated from the bar member by a notch 32c. The notch 32c opens towards the second side 21 of the bar member 3c. The distance 312c between the side 20 and the start of the notch is substantially equal to the difference between the height 110 of the slot 11 and the height 6c of the opening 5c in the leg member 4c along the longitudinal extension along axis B of the leg member 4c. Referring to figs. 14 and 16, the extension 300c of the first part is equal to the width of the notch 32c and is substantially equal to the thickness 40c of the wall of the leg member 4c at the location of the opening 5c. The width of the notch 32a may be wedged in such a manner that the extension 300c of the first part 30c corresponds to the narrowest part of the notch 32c. I.e. the width of the notch 32c may increase along a direction perpendicular to the longitudinal direction A and open towards the second side 21 of the bar member 2c.

The cut-in portion 14 has a height 140 substantially equal to half the height 313c of the bar member 2c. The length 141 of the cut-in portion 14 is substantially equal to the width 311 c of the bar member 2c. Upon engagement with a like bar member 2c the cut-in portions 14 form a cross-link with smooth surfaces on the first and second sides, 20, 21.

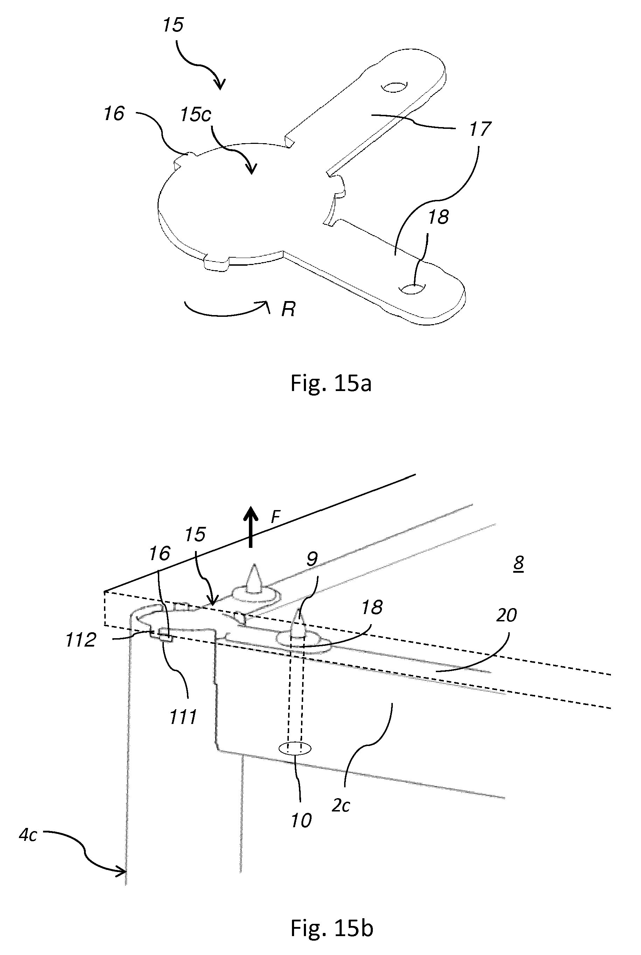

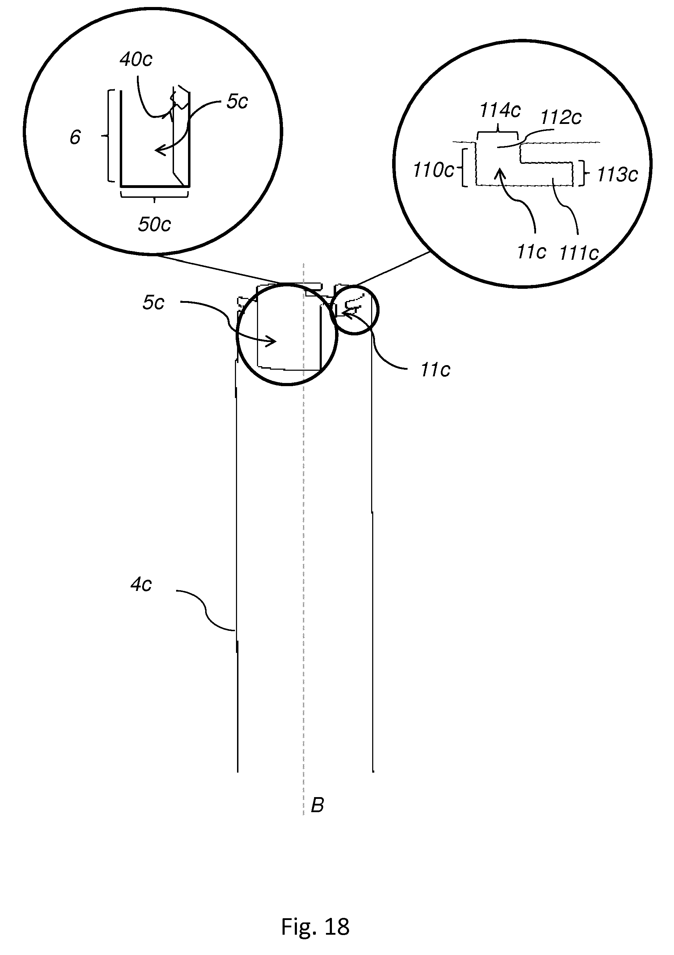

A further embodiment of the leg member 4 is a leg member 4c comprising a locking means 15c engageable to the leg member 4c by engaging means 16 configured to be engaged to a slot 11 c of the leg member 4c. The engaging means 16 may be described as one or more engaging projections. The locking means 15c is shown in fig. 15a. The locking means 15c may be described as a locking plate. The engaging means 16 are of substantially the same height as the height 113c of the slot 11 c. The width of the engaging means 16 is less or equal to the opening 114c of the slot 11c (see fig. 18). The slot 11c (as shown in fig. 18) comprises a first part 112c extending longitudinally along the axis B and a second part 111 c extending perpendicular to this axis B. The slot 11c has an L-shape. The locking means 15c is engaged to the leg member 4c by entering the engagement means 16 into the first part 112c of the slot 11 c by axial movement along axis B, and then performing a rotational movement R forcing the engagement means 16 into entering the second part 111 c of the slot 11c. The locking means 15 is thereby prevented from movement along the longitudinal axis B.

Further, the locking means 15c comprise projecting portions17 configured to extend along the first side 20 of the bar member 2c. The projecting portions 17 comprise holes 18 for simultaneously fastening, with fastening means 9 such as screws, the bar member 2c and the locking means 15c to a table top 8. As the fastening means 9 force the bar member 2c and locking means 15c towards the table top 8, the leg member 4c is simultaneously forced towards the table top 8 by the force exerted in the leg member 4c by the engagement with its locking means 15c . The engagement between bar member 2c and the leg member 4c with the locking means 15c as described above is illustrated in fig 15b.

In fig. 16 a cross section of a table frame fixed to a table top 8 is illustrated. A coupling member 3c is cross-linked with a like coupling member 3c inside the leg member 4c. The locking means 15c is engaged with the leg member 4c and fastened by the same fastening means 9 as the bar member 2c to the table top 8 forming a stable construction without need of welding or additional fastening means between leg member and bar member or leg member and table top.

A bottom view of two bar members 2c engaged to each other and to a leg member 4c via the coupling member 3c is illustrated in fig. 17. The bar members 2c and locking means 15c (not shown) are fastened by the fastening means 9 to the table top 8.

Fig. 18 shows the leg member 4c comprising one or more openings 5c for engagement with the coupling member 3c. The leg member 4c extends along a longitudinal axis B. The opening 5c opens to one of the longitudinal ends of the leg member 4c. The opening 5c may be formed as a cutout at the longitudinal end of the leg member 4c. The width 50c of the opening is substantially equal to the width 311 c (see fig. 14) of the coupling member 3c. The wall of the leg member 4c extends from the lower end of the opening 5c in length and direction as required for embracement by the coupling means. The thickness of the wall at the opening 5c corresponds to the width of the notch 32c. The leg member 4c comprises slots 11 in which the locking means 15 of the leg member 4c are engaged.

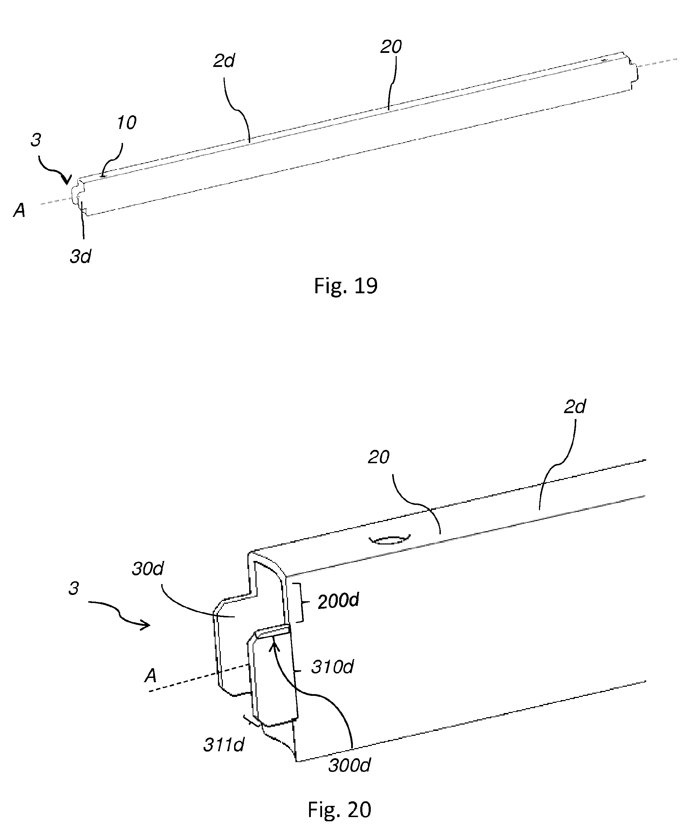

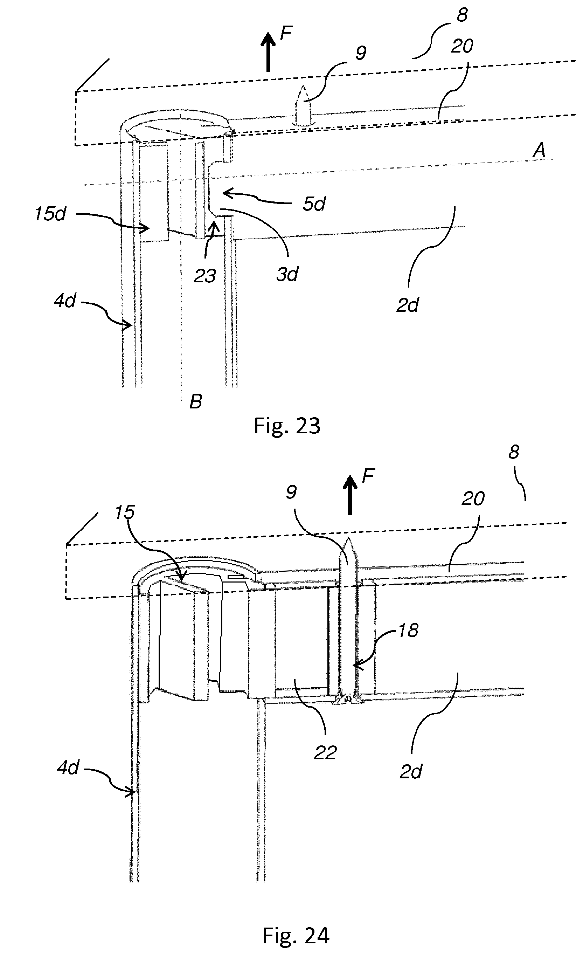

Fig. 19 shows yet another embodiment of a bar member 2d, extending a long a longitudinal axis A. The bar member 2d comprise at least one coupling projection 3d extending along the same axis A as the bar member 2d. The bar member further comprises a first side 20 which upon fixation comes into contact with a table top 8 (see fig. 23-24) and holes 10 for fastening means.

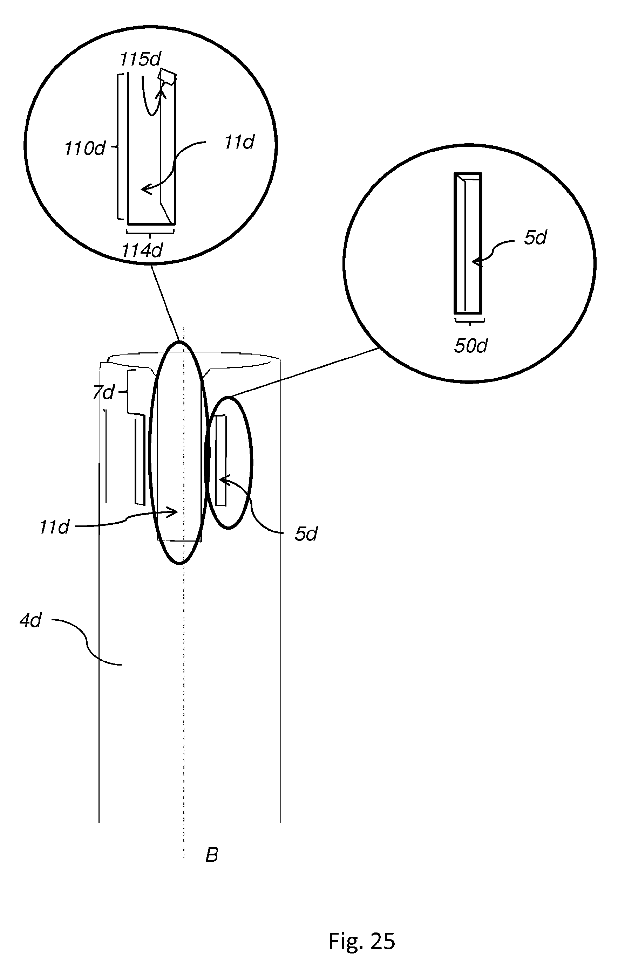

In fig. 20 an example of coupling projection 3d for engagement with the leg member 4d is illustrated. The coupling projection 3d is fixed to or forming one piece with the leg member 4d. The coupling projection 3d comprises a part 30d extending in the same direction as the bar member 2d. The width 311 d and height 310d of the extending part 30d are of dimensions configured to extend through the opening 5d of the leg member 4d. The distance 200d between the first side 20 and to where the part 30d extends from the bar member 2d equals the distance 7d between the longitudinal end of the leg member 4d and the opening 5d (see fig. 25).

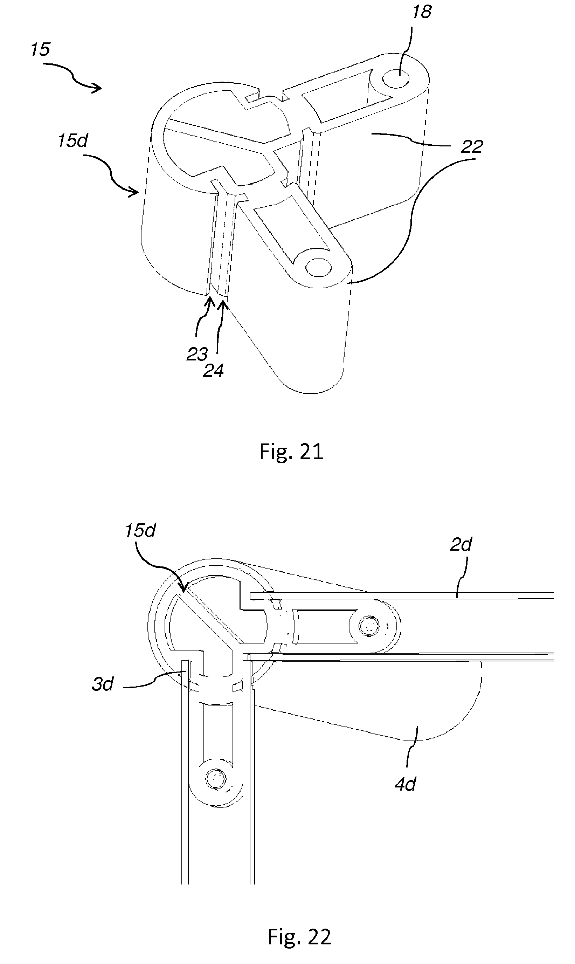

Figure 21 shows a further example of a locking means 15d configured to engage with the leg member 4d. The locking means 15d comprises projecting portions 22 configured to extend into the bar member 2d. Further, the locking means 15d comprises grooves 23 for engagement to the coupling projection 3d of the bar member 2d as well as grooves 24 on the locking projection 22 for engagement with the slot 11 d on the leg member 4d. The extending portions 22 comprise holes 18 configured for simultaneously fastening, with fastening means 9 such as screws, of the bar member 2d and the locking means 15d to a table top 8. The engagement between bar member 2d and the leg member 4d with the locking means 15d as described above is illustrated in fig 22.

Fig. 23 is a cross section of a leg member 4c comprising a locking means 15d engaged to a bar member 2d and fastened by screws 9 to a table top 8. The coupling projection 3d extends through the opening 5d in the leg member 4d and into the grooves 23 of the locking means. The screws 9 are simultaneously fastened through the bar member 2d and the locking means 15d, as demonstrated in fig. 24. Figure 24 also shows the extension of the locking projection 22 into the bar member 2d. As the fastening means 9 forces the bar member 2d and locking means 15d towards the table top 8, the leg member 4d is simultaneously forced towards the table top 8 by the force exerted in the leg member 4d by the engagement with its locking means 15d.

Fig. 25 shows the leg member 4d comprising one or more openings 5d for engagement with the coupling projection 3d. The leg member 4d extends along a longitudinal axis B. The slot 11d opens to one of the longitudinal ends of the leg member 4d. The slot 11 d is formed as a cut-out at the longitudinal end of the leg member 4d. The width 114d of the slot 11 d is substantially equal to the distance between the grooves 24 of the locking projection 22. The thickness 115d of the wall around the slot 11d corresponds to the width of the grooves 24. The openings 5d are located at a distance 7d from the longitudinal end of the leg member 4d. The width 50d of an opening 5d is substantially equal to the width 311d of a coupling projection 3d.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A furniture frame (1) comprising
at least one bar member (2, 2a, 2b, 2c, 2d) configured to be fastened to furniture top member (8) and,
at least one leg member (4, 4a, 4b, 4c, 4d),
wherein:
the bar member comprises at least one coupling means (3, 3a, 3b, 3c, 3d) configured to, when the bar member is fastened to a furniture top member, engage with said leg member, and
the leg member comprises at least one opening (5, 5a, 5b, 5c, 5d) configured to engage with said coupling means, such that the leg member becomes fixed to the furniture top member by said engagement when the bar member is fastened to said furniture top member.

2. A furniture frame (1) according to claim 1, wherein the bar member (2, 2a, 2b, 2c, 2d) extends along a longitudinal axis (A) and the coupling means (3, 3a, 3b, 3c, 3d) extends along the same axis as said bar members.

3. A furniture frame (1) according to claim 1 or 2, wherein said leg member (4c, 4d) comprises a locking means (15c, 15d) configured to engage with a slot (11c, 11 d) at a longitudinal end of the leg member to lock the bar member (2c, 2d) to the leg member.

4. A furniture frame (1) according to any of the previous claims, wherein said coupling means (3a, 3b, 3c) comprises a notch (32a, 32b, 32c) on the bar member (2a, 2b, 2c) extending perpendicular to the longitudinal axis (A) along which the bar member extends.

5. A furniture frame (1) according to claim 4, wherein said coupling means(3a, 3b, 3c) comprises a first part (30a, 30b, 30c) extending along the longitudinal axis (A) and a second part (31 a, 31 b, 31 c) extending along said notch (32a, 32b, 32c).

6. A furniture frame (1) according to claim 4 or 5, wherein said notch (32a, 32b, 32c) is wedged and configured to engage with the opening (5a, 5b, 5c) of the leg member (2a, 2b, 2c).

7. A furniture frame (1) according to claim 4-6, wherein said notch (32a, 32b) extends from a first side (20) of the bar member (2a, 2b) configured to be in contact with a furniture top member (8) when the bar member is fastened to said furniture top member.

8. A furniture frame (1) according to any of the claims 4-6 wherein the bar member (2c) comprises a first side (20) configured to be in contact with a furniture top member (8) when the bar member is fastened to said furniture top member, and wherein said notch (32c) extends from a second side (21) of the bar member being opposite said first side and towards said first side.

9. A furniture frame (1) according to claim 8, wherein said coupling means (3c) comprises a cut-in portion (14) at a longitudinal end of the bar member (2c).

10. A furniture frame (1) according to claim 9, wherein said cut-in portion (14) is arranged to engage two bar members (2c) to each other and extends from opposing sides at opposing longitudinal ends of the bar member.

11. A furniture frame (1) according to claim 3, wherein said coupling means (3d) comprises a coupling projection configured to extend into the opening (5d) of the leg member (4d).

12. A furniture frame (1) according to claim 11, wherein said locking means (15d) comprises a projecting portion (22) configured to extend into the bar member (2d).

13. A furniture frame (1) according to claims 1, 2 or 4-6, wherein said coupling means (3a) comprises at least one hook constituting an L-shape.

14. A furniture frame (1) according to any of the previous claims, wherein said at least one bar member (2, 2a, 2b, 2c, 2d) is arranged with at least one coupling means (3, 3a, 3b, 3c, 3d) on one or both ends of the bar member.

15. A piece of furniture comprising a furniture frame (1) according to any of claims 1- 14 and a furniture top member (8).
